# DEMANDE DE BREVET EUROPEEN

(11) **EP 1 241 757 A1**
(43) Date de publication de la demande: **18.09.2002**
(21) Numéro de dépôt: 02356049.3
(22) Date de dépôt: 12.03.2002
(51) Int. Cl.: H02G 3/04

(54) **Elément permettant de former un chemin de cables**

(30) Priorité: 12.03.2001 FR 0103342
(71) Demandeur: Hennequin, Bernard, 90000 Belfort (FR)
(72) Inventeur: Hennequin, Bernard, 90000 Belfort (FR)
(74) Mandataire: Maureau, Philippe

(57) **Abrégé**

Cet élément (1) est obtenu par assemblage de deux parties d'élément (5), chaque partie (5) comprenant l'une des parois latérales (2) de l'élément (1) et une portion du fond (4) de celui-ci. Les deux parties d'élément (5) sont de formes identiques, et chaque partie d'élément (5) comprend des moyens (15) d'accrochage à l'autre partie d'élément (5), régulièrement espacés sur la longueur de l'élément

Selon l'invention, chaque partie d'élément (5) comprend :
- des extrémités longitudinales (11) dépourvues de moyens d'accrochage (15) à l'autre partie d'élément (5) ; et
- les moyens d'accrochage (15) sont répartis selon un pas régulier, en étant disposés de telle sorte que le moyen d'accrochage (15) se trouvant au niveau d'une extrémité longitudinale (11) de la partie d'élément (5) est placé à environ un demi-pas de l'extrémité longitudinale (11) adjacente tandis que le moyen d'accrochage (15) se trouvant au niveau de l'autre extrémité longitudinale (11) de la partie d'élément (5) est placé à environ un pas de l'extrémité longitudinale (11) adjacente.

## Description

La présente invention concerne un élément permettant de former un chemin de câbles.

De tels éléments présentent, vus en bout, une forme en U et sont destinés à être assemblés bout à bout pour constituer une gouttière de réception de câbles, cette gouttière permettant le soutien et le cheminement des câbles dans une installation.

Ces éléments de chemin de câbles, compte tenu de leur mise en place en hauteur et du poids des câbles qu'ils peuvent être amenés à recevoir, doivent être rigides, doivent pouvoir être assemblés les uns aux autres de manière totalement sûre, et doivent pouvoir être manipulés et assemblés facilement.

À cet effet, de tels éléments sont réalisés en treillis de fils métalliques, en tôle ajourée ou en matière synthétique telle que du PVC ou du polyester.

Les éléments existants ont toutefois pour inconvénient d'occuper un volume important lors de leur stockage ou de leur transport, compte tenu de leur impossibilité d'emboîtement complet les uns dans les autres.

Un autre inconvénient est que ces éléments doivent exister en différentes largeurs afin de pouvoir être adaptés au nombre et au volume de câbles à installer. Il en résulte la nécessité de stocker et de gérer de nombreuses pièces de dimensions différentes, ce qui constitue une contrainte pratique importante.

Pour remédier à ces inconvénients, il a été conçu de réaliser un élément de chemin de câbles en deux parties. Chaque partie d'élément présente, vue en bout, une forme de L, c'est-à-dire comprend l'une des parois latérales de l'élément et une portion du fond de celui-ci, et est destinée à être assemblée à l'autre partie afin de former ledit élément.

Pour permettre cet assemblage, chaque partie d'élément comprend plusieurs fils longitudinaux au niveau de sa portion destinée à former le fond de l'élément de chemin de câbles, dont un fil longitudinal de rive, situé à proximité du bord longitudinal de cette partie qui est opposé à celui comportant ladite paroi latérale. Chaque partie d'élément comprend également des fils transversaux pourvus de zones d'accrochage à une autre partie d'élément, dont deux fils de rive aux extrémités longitudinales de la partie d'élément ; ces fils transversaux sont arrondis et recourbés au niveau du bord longitudinal de cette partie qui est opposé à celui comportant ladite paroi latérale, de manière à pouvoir venir en engagement avec le fil longitudinal de rive de l'autre partie d'élément, et inversement. L'assemblage est réalisé en plaçant le fil longitudinal de rive d'une partie d'élément contre le fil longitudinal de rive de l'autre partie d'élément, en engageant les portions arrondies des fils transversaux autour de ces fils longitudinaux de rive, et en engageant les extrémités recourbées des fils transversaux d'une partie d'élément en dessous des fils transversaux adjacents de l'autre partie d'élément, et réciproquement.

Ce matériel existant permet un gain de volume important puisque lesdites parties d'éléments peuvent être empilées avec une perte réduite d'espace. En outre, les parties d'éléments ont des formes identiques et peuvent être fabriquées avec une même machine.

Les parties d'éléments selon ce matériel existant ont toutefois pour inconvénient de présenter des faiblesses relatives au niveau des soudures qui assemblent les fils transversaux aux fils longitudinaux, notamment au niveau des parois latérales des éléments de chemin de câble. En effet, les câbles peuvent avoir un poids important et générer des contraintes tendant à créer des points de rotation des fils longitudinaux par rapport aux fils transversaux autour d'un axe perpendiculaire au plan dans lequel s'étendent ces fils longitudinaux et transversaux en un emplacement donné d'un élément de chemin de câble.

De plus, suivant leurs diamètres, les câbles ne sont pas toujours bien tenus entre les fils transversaux et peuvent "festonner" entre ces fils transversaux. Ces derniers forment des appuis localisés, qui peuvent générer un poinçonnement des gaines protectrices des câbles.

Ces éléments ont également un poids relativement important pour une résistance donnée.

En outre, les fils transversaux de rive, situés aux extrémités longitudinales d'un élément de chemin de câbles constitué à partir desdites parties d'éléments, sont décalés l'un par rapport à l'autre dans le sens longitudinal, après assemblage. Outre le fait de conférer à l'élément de chemin de câbles un aspect visuel peu souhaitable, ce décalage a pour inconvénient de complexifier la jonction bout à bout de deux éléments de chemin de câbles consécutifs.

La présente invention vise à remédier à l'ensemble des inconvénients exposés ci-dessus.

Un objectif de l'invention est de fournir un élément de chemin formé à partir de deux parties d'éléments identiques entre elles, dont la jonction bout à bout avec un élément de chemin de câbles identique soit facile, au même titre qu'avec des éléments de chemin de câbles en une seule pièce.

Un autre objectif de l'invention est de fournir un élément de chemin de câbles ayant, par rapport aux éléments de chemin de câbles selon la technique antérieure, une structure plus légère à résistance égale.

Un objectif supplémentaire de l'invention est de fournir un élément de chemin de câbles permettant un gain de volume important, un gain au niveau du transport et une réduction en ce qui concerne le nombre de références stockées.

Un autre objectif encore de l'invention est de fournir un élément de chemin de câbles en fils, dans lequel les soudures d'assemblage de fils transversaux à des fils longitudinaux sont protégées à l'égard des contraintes en pivotement précitées.

Un objectif supplémentaire de l'invention est de fournir un élément de chemin de câbles permettant d'empêcher aux câbles de "festonner" entre les fils transversaux, et de prévenir tout poinçonnement des gaines protectrices des câbles.

L'élément qu'elle concerne est, de manière connue en soi, obtenu par assemblage de deux parties d'élément, chaque partie d'élément présentant, vue en bout, une forme de L, c'est-à-dire comprenant l'une des parois latérales de l'élément de chemin de câbles et une portion du fond de celui-ci, et étant destinée à être assemblée à l'autre partie d'élément afin de former ledit élément ; les deux parties d'élément sont de formes identiques, et chaque partie d'élément comprend des moyens d'accrochage à l'autre partie d'élément, régulièrement espacés sur la longueur de l'élément.

Selon l'invention,
- chaque partie d'élément comprend des extrémités longitudinales dépourvues de moyens d'accrochage à l'autre partie d'élément ; et
- les moyens d'accrochage sont répartis selon un pas régulier, en étant disposés de telle sorte que le moyen d'accrochage se trouvant au niveau d'une extrémité longitudinale de la partie d'élément est placé à environ un demi-pas de l'extrémité longitudinale adjacente tandis que le moyen d'accrochage se trouvant au niveau de l'autre extrémité longitudinale de la partie d'élément est placé à environ un pas de l'extrémité longitudinale adjacente.

L'absence de moyens d'accrochage au niveau des extrémités longitudinales et le décalage des moyens d'accrochage par rapport à ces extrémités longitudinales permet de positionner les extrémités longitudinales des deux parties d'éléments en regard l'une de l'autre dans le sens longitudinal et donc de faciliter la jonction bout à bout de deux éléments de chemin de câbles consécutifs.

A partir de trois éléments de base de largeurs différentes, par exemple de 100 mm, 200 mm et 300 mm, il est possible, par combinaison de ces éléments de base, d'obtenir un nombre important de chemins de câbles de largeurs différentes, à savoir 200, 300, 400, 500 et 600 mm dans l'exemple précité. Il en résulte un gain de volume important, un gain au niveau du transport des éléments et une réduction en ce qui concerne le nombre de références stockées.

De préférence, l'élément de chemin de câbles étant réalisé par assemblage de fils longitudinaux et transversaux, chaque partie d'élément comprend :
- des fils transversaux de rive, situés aux extrémités longitudinales de la partie d'élément, qui sont dépourvus de moyens d'accrochage à l'autre partie d'élément ; et
- des fils transversaux d'accrochage, pourvus de moyens d'accrochage à l'autre partie d'élément, qui sont groupés par paires de fils selon un pas régulier, ces paires de fils étant disposées de telle sorte que la paire de fils se trouvant au niveau d'une extrémité longitudinale de la partie d'élément est placée à environ un demi-pas du fil transversal de rive adjacent tandis que la paire de fils se trouvant au niveau de l'autre extrémité longitudinale de la partie d'élément est placée à environ un pas du fil transversal de rive adjacent.

Le groupement des fils transversaux d'accrochage par paires permet non seulement de doubler les points d'assemblage des fils transversaux aux fils longitudinaux mais surtout d'aménager des paires de points de fixation proches l'un de l'autre. Ces paires de points de fixation permettent de s'opposer efficacement auxdites contraintes en pivotement.

Le groupement des fils transversaux par paires augmente de plus les points d'appui des câbles sur les fils transversaux, ce qui permet de lutter efficacement contre le "festonnement" des câbles, ainsi que contre le risque de poinçonnement des gaines de ces câbles.

Avantageusement, les deux fils transversaux d'accrochage d'une même paire de fils sont reliés l'un à l'autre par une traverse, au niveau de la zone de la partie d'élément destinée à former la paroi latérale de l'élément de chemin de câbles.

Cette traverse peut être fixée au fil longitudinal adjacent sur une large surface, contribuant ainsi à renforcer la structure de l'élément de chemin de câbles et à prévenir efficacement tout risque d'exercice desdites contraintes en pivotement.

De préférence, les deux fils transversaux d'accrochage d'une même paire de fils sont reliés l'un à l'autre par une traverse au niveau de leurs extrémités formant le moyen d'accrochage à l'autre partie d'élément.

Cette traverse renforce la rigidité structurelle de chaque paire de fils transversaux.

De plus, au niveau de la fabrication, chaque paire de fils transversaux peut être constituée par repliage sur lui-même d'un même fil. Dans ce cas, avantageusement, la jonction des deux extrémités de ce fil se fait au niveau de ladite zone de la partie d'élément destinée à constituer la paroi latérale de l'élément de chemin de câbles, en dehors de ladite traverse reliant les deux fils transversaux d'une même paire de fils.

Cette traverse et les zones de jonction de celle-ci auxdits fils transversaux sont ainsi dépourvues de toute aspérité susceptible d'être blessante, et la paire de fils transversaux présente, au niveau de sa jonction avec les fils longitudinaux appartenant à ladite zone destinée à constituer la paroi latérale de l'élément de chemin de câbles, une parfaite rigidité.

Pour sa bonne compréhension, l'invention est à nouveau décrite ci-dessous en référence au dessin schématique annexé représentant, à titre d'exemples non limitatifs, deux formes de réalisation possibles de l'élément de chemin de câbles qu'elle concerne.
La figure 1 est une vue en perspective d'une partie d'élément utilisée pour obtenir cet élément de chemin de câbles ;
la figure 2 est une vue similaire à la figure 1 de l'élément obtenu par assemblage de deux parties d'élément identiques à celle montrée sur la figure 1, et
la figure 3 est une vue similaire à la figure 2, le montage des parties d'élément étant légèrement différent.

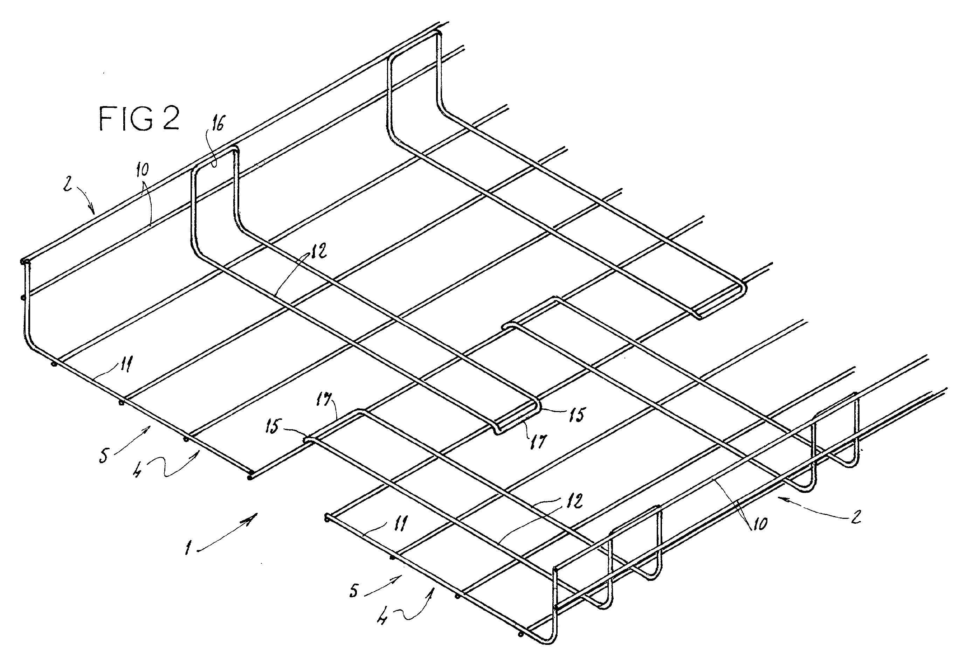

La figure 2 représente un élément 1 permettant de former un chemin de câbles.

Cet élément 1 présente, vu en bout, une forme en U, c'est-à-dire comprend deux parois latérales 2 et une paroi de fond 4. Il est destiné à être assemblé bout à bout à d'autres éléments 1 identiques pour constituer une gouttière de réception de câbles, cette gouttière permettant le soutien et le cheminement des câbles dans une installation.

Le montage des éléments 1 le long d'une paroi de support est réalisé notamment au moyen de consoles fixées à cette paroi.

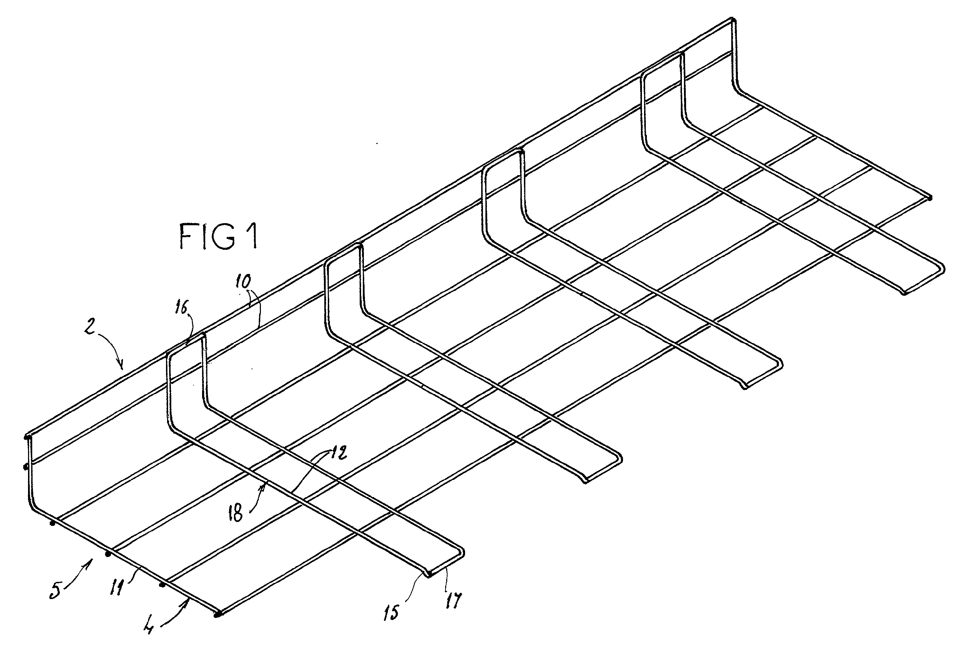

L'élément 1 est obtenu par assemblage de deux parties d'élément 5, identiques entre elles et dont chacune est identique à la partie d'élément 5 montrée sur la figure 1.

La partie d'élément 5 présente, vue en bout, une forme de L, c'est-à-dire comprend l'une des parois latérales 2 et une portion du fond 4, et est destinée à être assemblée à l'autre partie 5 afin de former ledit élément 1.

La partie 5 comprend des fils longitudinaux 10 et transversaux 11, 12, assemblés entre eux par soudure au niveau de leurs points de croisement.

Dans l'exemple représenté, cette partie 5 comprend deux fils longitudinaux 10 au niveau de la paroi 2 et quatre fils longitudinaux 10 au niveau de la portion du fond 4.

Les fils transversaux 11, 12 sont de deux sortes, à savoir les fils transversaux de rive 11, situés aux extrémités longitudinales de la partie d'élément 5, qui sont dépourvus de zones d'accrochage 15 à l'autre partie d'élément 5, et des fils transversaux d'accrochage 12, pourvus desdites zones 15, qui sont groupés par paires de fils selon un pas régulier.

Les deux fils 12 d'une même paire sont reliés l'un à l'autre par une traverse 16, au niveau du fil 10 supérieur de la paroi 2, cette traverse 16 étant fixée à ce fil 10 sur l'ensemble de sa longueur. Du côté opposé, les deux fils 12 d'une même paire de fils sont recourbés et sont reliés l'un à l'autre par une traverse 17 de manière à former une zone en crochet, propre à venir s'engager autour du fil de rive 10 d'une autre partie d'élément 5 pour assembler ces deux parties d'élément 5 et former ainsi un élément de chemin de câbles 1, comme montré sur la figure 2.

Chaque paire de fils 12 est constituée par repliage sur lui-même d'un même fil métallique, et la jonction 18 des deux extrémités de ce fil se fait au niveau d'un point situé en dehors de la traverse 16, notamment dans la zone médiane des fils 12 ou au niveau de la traverse 17.

Ainsi que cela apparaît sur la figure 2, les paires de fils 12 sont disposées de telle sorte que la paire de fils 12 se trouvant au niveau d'une extrémité longitudinale de la partie d'élément 5 est placée à environ un demi-pas du fil transversal 11 adjacent tandis que la paire de fils 12 se trouvant au niveau de l'autre extrémité longitudinale de la partie d'élément 5 est placée à environ un pas du fil transversal 11 adjacent.

L'assemblage de deux parties d'élément 5 est réalisé comme montré sur la figure 2, les zones 15 d'une partie d'élément 5 venant en engagement avec le fil 10 de l'autre partie d'élément 5, et inversement ; le positionnement précité des paires de fils 12 permet qu'une paire de fils 12 d'une partie d'élément 5 vient se placer sensiblement entre deux paires de fils 12 de l'autre partie d'élément 5, et l'absence de zone d'accrochage 15 au niveau des fils 11 permet de positionner ces fils 11 en regard l'un de l'autre dans le sens longitudinal et donc de faciliter la jonction bout à bout de deux éléments 1 de chemin de câbles consécutifs.

Une fois montées sur des consoles de support, les deux parties d'élément 5 sont parfaitement immobilisées l'une par rapport à l'autre.

Le fait que chaque élément 1 soit en deux parties facilite la manipulation de ces éléments 1 lorsque ceux-ci ont une largeur importante, et donc un poids important ; une partie d'élément 5 peut être mise en place puis l'autre partie d'élément 5.

En outre, les parties d'éléments 5 peuvent faire partie d'une gamme dans laquelle des parties d'éléments 5 présentent différentes largeurs au niveau de leur zone de fond 4, notamment selon le nombre de fils 10 que comprend cette zone, dans l'exemple représenté ; ainsi cette gamme peut par exemple comprendre des parties d'élément 5 de 100, 200 ou 300 mm de large, permettant, selon les différentes parties d'éléments 5 qui sont combinées deux à deux, d'obtenir des éléments 1 de 200, 300, 400, 500 ou 600 mm de large.

Le groupement des fils transversaux d'accrochage par paires permet de doubler les points d'assemblage des fils 11, 12 aux fils 10 et surtout d'aménager des paires de points de fixation proches l'un de l'autre pour les fils 12. Ces paires de points de fixation permettent de s'opposer efficacement aux contraintes exercées sur les soudures qui assemblent les fils 12 aux fils 10 lorsque les câbles ont un poids important. Les traverses 16 et 17 contribuent à la solidité de la structure des parties d'éléments 5.

Ces parties d'éléments 5 peuvent ainsi avoir, par rapport aux éléments de la technique antérieure, un poids réduit à résistance égale.

Le groupement des fils 12 par paires augmente de plus les points d'appui des câbles sur ces fils 12, ce qui permet de lutter efficacement contre le "festonnement" des câbles, ainsi que contre le risque de poinçonnement des gaines de ces câbles.

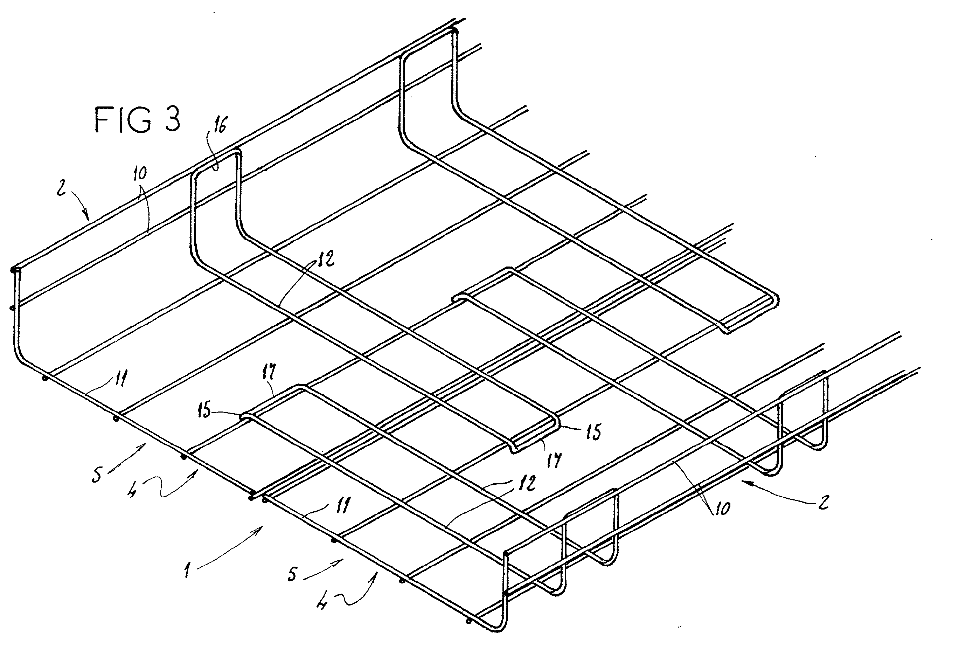

La figure 3 montre que les fils longitudinaux de rive des parois de fond 4 peuvent venir en contact l'un de l'autre, les zones d'accrochage 15 venant en engagement autour des fils longitudinaux respectifs adjacents à ces fils longitudinaux de rive.

Ainsi qu'il apparaît de ce qui précède, l'invention fournit un élément 1 présentant de nombreux avantages par rapport aux éléments homologues de la technique antérieure, en particulier ceux d'être formé à partir de deux parties d'éléments identiques entre elles, et d'avoir des soudures d'assemblage des fils transversaux aux fils longitudinaux qui sont protégées à l'égard des contraintes en pivotement précitées.

Il va de soi que l'invention n'est pas limitée à la forme de réalisation décrite ci-dessus à titre d'exemple mais qu'elle en embrasse au contraire toutes les variantes de réalisation couvertes par les revendications ci-annexées. En particulier, les éléments de chemin de câbles peuvent être en treillis de fils métalliques comme représenté, mais peuvent également être en tôle ajourée ou en matière synthétique telle que du PVC ou du polyester.

## Revendications

1. Elément permettant de former un chemin de câbles, obtenu par assemblage de deux parties d'élément (5), chaque partie d'élément (5) présentant, vue en bout, une forme de L, c'est-à-dire comprenant l'une des parois latérales (2) de l'élément (1) et une portion du fond (4) de celui-ci, et étant destinée à être assemblée à l'autre partie d'élément (5) afin de former ledit élément (1) ; les deux parties d'élément (5) sont de formes identiques, et chaque partie d'élément (5) comprend des moyens (15) d'accrochage à l'autre partie d'élément (5), régulièrement espacés sur la longueur de l'élément ;
élément (1) **caractérisé en ce que** chaque partie d'élément (5) comprend :
- des extrémités longitudinales (11) dépourvues de moyens d'accrochage (15) à l'autre partie d'élément (5) ; et
- les moyens d'accrochage (15) sont répartis selon un pas régulier, en étant disposés de telle sorte que le moyen d'accrochage (15) se trouvant au niveau d'une extrémité longitudinale (11) de la partie d'élément (5) est placé à environ un demi-pas de l'extrémité longitudinale (11) adjacente tandis que le moyen d'accrochage (15) se trouvant au niveau de l'autre extrémité longitudinale (11) de la partie d'élément (5) est placé à environ un pas de l'extrémité longitudinale (11) adjacente.

2. Elément selon la revendication 1, réalisé par assemblage de fils longitudinaux (10) et des fils transversaux (11, 12), **caractérisé en ce que** chaque partie d'élément (5) comprend :
- des fils transversaux de rive (11), situés aux extrémités longitudinales de la partie d'élément, qui sont dépourvus de moyens d'accrochage (15) à l'autre partie d'élément (5) ; et
- des fils transversaux d'accrochage (12), pourvus de moyens d'accrochage (15) à l'autre partie d'élément (5), qui sont groupés par paires de fils selon un pas régulier, ces paires de fils (12) étant disposées de telle sorte que la paire de fils (12) se trouvant au niveau d'une extrémité longitudinale de la partie d'élément (5) est placée à environ un demi-pas du fil transversal de rive (11) adjacent tandis que la paire de fils (12) se trouvant au niveau de l'autre extrémité longitudinale de la partie d'élément (5) est placée à environ un pas du fil transversal de rive (11) adjacent.

3. Elément selon la revendication 2, **caractérisé en ce que** les deux fils transversaux d'accrochage (12) d'une même paire de fils sont reliés l'un à l'autre par une traverse (16), au niveau de la zone de la partie d'élément (5) destinée à former la paroi latérale (2) de l'élément de chemin de câbles (1).

4. Elément selon la revendication 3, **caractérisé en ce que** la traverse (16) est fixée au fil longitudinal adjacent (10) sur une large surface.

5. Elément selon l'une des revendications 2 à 4, **caractérisé en ce que** les deux fils transversaux d'accrochage (12) d'une même paire de fils sont reliés l'un à l'autre par une traverse (17) au niveau de leurs extrémités formant le moyen d'accrochage (15) à l'autre partie d'élément (5).

6. Elément selon la revendication 5, **caractérisé en ce que** chaque paire de fils transversaux (12) est constituée par repliage sur lui-même d'un même fil.

7. Elément selon la revendication 6, **caractérisé en ce que** la jonction (18) des deux extrémités du fil ainsi repliée se fait au niveau de ladite zone de la partie d'élément (5) destinée à constituer la paroi latérale (2) de l'élément de chemin de câbles (1), en dehors de ladite traverse (16) reliant les deux fils transversaux (12) d'une même paire de fils.

8. Gamme d'éléments selon l'une des revendications 1 à 6, dans laquelle des parties d'éléments (5) présentent différentes largeurs au niveau de leur zone de fond (4).

9. Gamme d'éléments selon la revendication 8, **caractérisée en ce qu'**elle comprend des parties d'élément (5) de 100, 200 ou 300 mm de large, permettant, selon les différentes parties d'éléments (5) qui sont combinées deux à deux, d'obtenir des éléments de chemin de câbles (1) de 200, 300, 400, 500 ou 600 mm de large.
